# EUROPEAN PATENT APPLICATION

(11) **EP 4 238 934 A1**
(43) Date of publication of application: **06.09.2023**
(21) Application number: 21939742.9
(22) Date of filing: 30.07.2021
(51) Int. Cl.: C01B 25/42, A23L 29/00

(54) **ANHYDROUS TRISODIUM HYDROGEN DIPHOSPHATE, AND PREPARATION METHOD THEREFOR AND APPLICATION THEREOF**

(30) Priority: 07.05.2021 CN 202110497190
(71) Applicant: Yunnan Addiphos Technology Co., Ltd., Kunming, Yunnan 650000 (CN)
(72) Inventor: LI, Jingmin, Kunming, Yunnan 650000 (CN); LI, Wen, Kunming, Yunnan 650000 (CN)
(74) Representative: Porta & Consulenti Associati S.p.A.
(86) International application number: PCT/CN2021/109498
(87) International publication number: WO 2022/233097

(57) **Abstract**

The present disclosure relates to the technical field of phosphate additives, in particular to a trisodium hydrogen diphosphate anhydrate and a preparation method and use thereof. The preparation method of the trisodium hydrogen diphosphate anhydrate includes the following steps: heating a trisodium hydrogen diphosphate monohydrate at 155°C to 165°C for 110 min to 130 min. In the present disclosure, a high-purity trisodium hydrogen diphosphate monohydrate is heated under specific conditions to control a dehydration amount and a degree of hydrolysis of the trisodium hydrogen diphosphate monohydrate. In this way, a trisodium hydrogen diphosphate anhydrate is obtained with a purity of greater than or equal to 95.0%. Moreover, the preparation method has simple operations and mild conditions.

## Description

### CROSS REFERENCE TO RELATED APPLICATION

The present disclosure claims the priority to Chinese Patent Application CN202110497190.2, filed with China National Intellectual Property Administration (CNIPA) on May 7, 2021, and titled "TRISODIUM HYDROGEN DIPHOSPHATE ANHYDRATE AND PREPARATION METHOD AND USE THEREOF", which is incorporated herein by reference in its entirety.

### TECHNICAL FIELD

The present disclosure relates to the technical field of phosphate additives, in particular to a trisodium hydrogen diphosphate anhydrate and a preparation method and use thereof.

### BACKGROUND

Trisodium hydrogen diphosphate monohydrate is a phosphate food additive widely used in recent years, as well as a feeding attractant for pets. There are mainly two synthetic methods of trisodium hydrogen diphosphate monohydrate. One is neutralization crystallization, where the trisodium hydrogen diphosphate monohydrate is prepared by a disodium dihydrogen pyrophosphate solution and a sodium solution. The other is a hydrothermal method, where the trisodium hydrogen diphosphate monohydrate is prepared by mixing sodium pyrophosphate with disodium dihydrogen pyrophosphate at a chemical ratio, and spraying water vapor to conduct a hydrothermal reaction. However, the neutralization crystallization has a material efficiency of up to 92% in food and food processing due to the presence of crystal water. Moreover, the mixed hydrothermal method has excessive non-effective ingredients, and shows an effective rate in use of generally only 70% to 80%. Therefore, the production of trisodium hydrogen diphosphate anhydrate is of great significance.

In addition, when the trisodium hydrogen diphosphate monohydrate prepared by the above two methods is further heated to remove crystal water, removed crystal water vapor may escape. This causes hydrolysis of the trisodium hydrogen diphosphate monohydrate. At this time, due to the local inhomogeneity of sodium ions, sodium pyrophosphate and disodium dihydrogen pyrophosphate are generated, and even sodium tripolyphosphate, sodium metaphosphate, and sodium orthophosphate may be produced.

At present, trisodium hydrogen diphosphate anhydrate sold in the international market is a mixture including sodium pyrophosphate, disodium dihydrogen pyrophosphate, and trisodium hydrogen diphosphate. The trisodium hydrogen diphosphate anhydrate only accounts for 25% to 55% of the mixture.

### SUMMARY

The present disclosure provides a preparation method of a trisodium hydrogen diphosphate anhydrate. The preparation method has simple operations and mild conditions. In the preparation method, a high-purity trisodium hydrogen diphosphate monohydrate is heated under a specific temperature for a specific time to control a dehydration amount and a degree of hydrolysis of the trisodium hydrogen diphosphate monohydrate. In this way, a trisodium hydrogen diphosphate anhydrate is obtained with a purity of greater than or equal to 95.0%.

The present disclosure further provides a trisodium hydrogen diphosphate anhydrate, where the trisodium hydrogen diphosphate anhydrate has a purity of up to 95.2%, and a weight loss on ignition of less than or equal to 4.5% (at 800°C±25°C). This fills the blank of a trisodium hydrogen diphosphate anhydrate product.

In order to realize the present disclosure, the following technical solutions are specially adopted:
The present disclosure provides a preparation method of a trisodium hydrogen diphosphate anhydrate, including the following steps:
heating a trisodium hydrogen diphosphate monohydrate at 155°C to 165°C for 110 min to 130 min.

Optionally, the trisodium hydrogen diphosphate monohydrate is heated at 800°C±25°C until a weight loss on ignition is less than or equal to 4.5%, such as 4.2% to 4.5%.

The characteristics of the trisodium hydrogen diphosphate anhydrate are as follows: (a) an obtained product is analyzed by X-ray diffraction (XRD) to obtain a spectrum. Quantitative + semiquantitative analysis is conducted on a peak of trisodium hydrogen diphosphate in the spectrum to obtain a content of the trisodium hydrogen diphosphate. (b) The weight loss on ignition is observed to determine the trisodium hydrogen diphosphate anhydrate and the trisodium hydrogen diphosphate monohydrate. If the weight loss on ignition is less than or equal to 4.5% (at 800°C±25°C), the peak of the trisodium hydrogen diphosphate in the spectrum represents the trisodium hydrogen diphosphate anhydrate. If the weight loss on ignition is greater than or equal to 9.5% (at 800°C±25°C), the peak of the trisodium hydrogen diphosphate in the spectrum represents the trisodium hydrogen diphosphate monohydrate.

Optionally, the trisodium hydrogen diphosphate monohydrate has a purity of greater than or equal to 98%.

A high-purity trisodium hydrogen diphosphate monohydrate is beneficial to the preparation of a high-purity trisodium hydrogen diphosphate anhydrate.

The purity within the above range is more conducive to the preparation of the trisodium hydrogen diphosphate anhydrate with a purity of greater than or equal to 95.0%.

Optionally, the trisodium hydrogen diphosphate monohydrate has a purity of greater than or equal to 98.5%.

Optionally, a preparation method of the trisodium hydrogen diphosphate monohydrate with a purity of greater than or equal to 98% includes:
dissolving 1 mol of disodium dihydrogen pyrophosphate in water at 45°C, adding 1 mol of a sodium hydroxide solution with a mass fraction of 45%, and conducting crystallization at a high temperature of 85°C to 90°C; and subjecting a resulting product to filtration and drying to obtain a trisodium hydrogen diphosphate monohydrate with a purity of 98.5%, which has a weight loss on ignition of less than or equal to 11.0% at 800°C±25°C.

Optionally, at 800°C±25°C, the trisodium hydrogen diphosphate monohydrate with a purity of 98.5% has a weight loss on ignition of less than or equal to 9.0%.

Optionally, the heating is conducted at a constant temperature.

The constant-temperature heating can better ensure an amount of dehydration and can better control a hydrolysis rate.

Optionally, during the heating, a content of the trisodium hydrogen diphosphate monohydrate can be controlled to decrease by about 3.0% (on a dry basis).

Optionally, the heating is conducted at 157°C to 163°C.

The above temperature range is more conducive to controlling a progress of the reaction, thereby obtaining a trisodium hydrogen diphosphate anhydrate with a higher purity.

Optionally, the heating is conducted for 115 min to 128 min.

The above heating time is beneficial to control a dehydration rate of the trisodium hydrogen diphosphate monohydrate and a progress of the reaction, thereby obtaining a trisodium hydrogen diphosphate anhydrate with a higher purity.

Optionally, the heating is conducted for 117 min to 125 min.

Optionally, the heating is conducted in a polymerization furnace or a drying furnace.

The present disclosure further provides a trisodium hydrogen diphosphate anhydrate, prepared by the preparation method, where at 800°C±25°C, the trisodium hydrogen diphosphate anhydrate has a purity of greater than or equal to 95.0% and a weight loss on ignition of less than or equal to 4.5%.

In the present disclosure, the trisodium hydrogen diphosphate anhydrate has a high purity, and fills the blank of a trisodium hydrogen diphosphate anhydrate product.

Optionally, at 800°C±25°C, the weight loss on ignition is 4.2% to 4.5%.

Optionally, the trisodium hydrogen diphosphate anhydrate has a purity of greater than or equal to 95.2%.

By controlling a purity of raw materials, as well as heating temperature and time, a trisodium hydrogen diphosphate anhydrate can be prepared with a higher purity.

The present disclosure further provides use of the preparation method or the trisodium hydrogen diphosphate anhydrate in food processing.

Optionally, the trisodium hydrogen diphosphate anhydrate is used as a food additive.

Exemplarily, the trisodium hydrogen diphosphate anhydrate is used as a food additive in a pet feeding attractant.

### BRIEF DESCRIPTION OF THE DRAWINGS

To describe the technical solutions in the examples or comparative examples of the present disclosure more clearly, the following briefly describes the accompanying drawings required for describing the examples or comparative examples. Apparently, the accompanying drawings in the following description show merely some embodiments of the present disclosure, and those of ordinary skill in the art may still derive other drawings from these accompanying drawings without creative efforts.
FIG. 1 shows that in the present disclosure, a trisodium hydrogen diphosphate monohydrate with a purity of 98.5% is used for ignition in a SX₂-5-12 box-type resistance furnace, where a weight loss on ignition is less than 9.5% (at 800°C±25°C), and a resulting product is used as a raw material for the production of a trisodium hydrogen diphosphate anhydrate; and the raw material trisodium hydrogen diphosphate monohydrate is subjected to XRD analysis through a Malvern Panalytical pert 3 x-ray powder to obtain an XRD pattern;
FIG. 2 shows an XRD pattern of a trisodium hydrogen diphosphate anhydrate prepared in Example 1 provided by the present disclosure at a weight loss on ignition of 4.25% (at 800°C±25°C);
FIG. 3 shows an XRD pattern of a product obtained in Comparative Example 1 provided by the present disclosure at a heating temperature of greater than 165°C and a weight loss on ignition of 4.5%;
FIG. 4 shows an XRD pattern of a product obtained in Comparative Example 2 provided by the present disclosure at a weight loss on ignition of 4.5% and heating temperature and time at a lower limit of this technology; and
FIG. 5 shows an XRD pattern of a product obtained in Comparative Example 3 provided by the present disclosure at a weight loss on ignition of 4.5% and a heating temperature below the lower limit of this technology for an extended heating time.

### DETAILED DESCRIPTION OF THE EMBODIMENTS

Technical solutions of the present disclosure will be clearly and completely described below with reference to specific implementations. However, those skilled in the art will understand that the examples described below are merely some rather than all of the examples of the present disclosure, and the examples are only used to illustrate the present disclosure and should not be regarded as limiting the scope of the present disclosure. All other embodiments obtained by those of ordinary skill in the art based on the embodiments of the present disclosure without creative efforts should fall within the protection scope of the present disclosure. If no specific conditions are specified in the examples, the examples will be implemented under conventional conditions or the conditions recommended by the manufacturer. If the reagents or instruments used do not indicate the manufacturer, they are all conventional products that can be commercially available.

Trisodium hydrogen diphosphate monohydrate is a phosphate food additive widely used in recent years. However, the trisodium hydrogen diphosphate monohydrate has inefficiencies in use.

Moreover, since crystal water is not easy to remove, trisodium hydrogen diphosphate monohydrate can be slowly decomposed into disodium dihydrogen pyrophosphate and sodium pyrophosphate when being heated, and even produce sodium tripolyphosphate, sodium metaphosphate, and sodium orthophosphate. Furthermore, currently trisodium hydrogen diphosphate anhydrate sold in the market is a mixture including sodium pyrophosphate, disodium dihydrogen pyrophosphate, and trisodium hydrogen diphosphate. The trisodium hydrogen diphosphate anhydrate only accounts for 25% to 55% of the mixture.

Therefore, the production of trisodium hydrogen diphosphate anhydrate is of great significance.

In order to solve the above problems, the present disclosure provides a preparation method of a trisodium hydrogen diphosphate anhydrate. The preparation method has simple operations and mild conditions. In the preparation method, a high-purity trisodium hydrogen diphosphate monohydrate is heated under a specific temperature for a specific time to control a dehydration amount and a degree of hydrolysis of the trisodium hydrogen diphosphate monohydrate.

The present disclosure provides a preparation method of a trisodium hydrogen diphosphate anhydrate, including the following steps:
A trisodium hydrogen diphosphate monohydrate has a purity of greater than or equal to 98.5% and a weight loss on ignition of less than 9.5% (at 800°C±25°C), and is used as a raw material for processing.

The preparation method includes: heating a trisodium hydrogen diphosphate monohydrate at 155°C to 165°C for 110 min to 130 min.

In the preparation method of a trisodium hydrogen diphosphate anhydrate provided by the present disclosure, a high-purity trisodium hydrogen diphosphate monohydrate is heated under specific conditions to obtain the trisodium hydrogen diphosphate anhydrate with a purity of greater than or equal to 95.0%.

Optionally, the trisodium hydrogen diphosphate monohydrate has a purity of greater than or equal to 98%.

Optionally, the trisodium hydrogen diphosphate monohydrate has a purity of greater than or equal to 98.5%.

Optionally, the heating is conducted at a constant temperature.

Optionally, the heating is conducted at 157°C to 163°C, and 158°C, 159°C, 160°C, 161°C, or 162°C are included.

Optionally, the heating is conducted for 115 min to 128 min, such as 117 min to 125 min, and 116 min, 118 min, 119 min, 120 min, 121 min, 122 min, 123 min, 124 min, 126 min, or 127 min are included.

The present disclosure further provides a trisodium hydrogen diphosphate anhydrate, prepared by the preparation method, where at 800°C±25°C, the trisodium hydrogen diphosphate anhydrate has a purity of greater than or equal to 95.0% and a weight loss on ignition of less than or equal to 4.5%. Exemplarily, the weight loss on ignition is 4.2% to 4.5% (at 800°C±25°C).

Optionally, the trisodium hydrogen diphosphate anhydrate has a purity of greater than or equal to 95.2%.

In the present disclosure, the trisodium hydrogen diphosphate anhydrate has a high purity, and fills the blank of a trisodium hydrogen diphosphate anhydrate product.

The present disclosure further provides use of the preparation method or the trisodium hydrogen diphosphate anhydrate in food processing.

Optionally, the trisodium hydrogen diphosphate anhydrate is used as a food additive.

Exemplarily, the trisodium hydrogen diphosphate anhydrate is used as a food additive in a pet feeding attractant.

In the present disclosure, the trisodium hydrogen diphosphate anhydrate is used in food processing, can greatly improve a quality of the product, and can also improve an application efficiency, which is conducive to further popularization.

For example, in pet feeding attractants with a pyrophosphate added, pets' tastes and preferences are arranged as follows: trisodium hydrogen diphosphate anhydrate, followed by disodium dihydrogen pyrophosphate and sodium pyrophosphate in sequence. Obviously, as the purity of the trisodium hydrogen diphosphate anhydrate increases, the efficacy of the food also increases significantly.

Meanwhile, for food processing, the trisodium hydrogen diphosphate anhydrate has a purity of greater than or equal to 95.0%, which means that the trisodium hydrogen diphosphate anhydrate is almost a pure neutral chemical.

Currently, only a mixture additive of disodium dihydrogen pyrophosphate, trisodium hydrogen diphosphate, and sodium pyrophosphate is available. However, adding the mixture of disodium dihydrogen pyrophosphate, trisodium hydrogen diphosphate, and sodium pyrophosphate may cause various pH of the food, thereby affecting the taste, color, and quality of the food.

Therefore, the trisodium hydrogen diphosphate anhydrate provided by the present disclosure is used in food processing, and can avoid poor taste, color, and quality of the food caused by inconsistency in pH.

The present disclosure has the following beneficial effects:
(1) In the present disclosure, the preparation method of a trisodium hydrogen diphosphate anhydrate has simple operations and mild conditions. By heating a high-purity trisodium hydrogen diphosphate monohydrate at a specific temperature for a specific time, the amount of dehydration and the degree of hydrolysis of the trisodium hydrogen diphosphate monohydrate can be controlled. Moreover, a trisodium hydrogen diphosphate anhydrate with a purity of greater than or equal to 95.0% is obtained at a weight loss on ignition of less than or equal to 4.5%.
(2) In the present disclosure, the trisodium hydrogen diphosphate anhydrate has a purity of up to 95.2%, and fills the blank of a trisodium hydrogen diphosphate anhydrate product.
(3) In the present disclosure, the trisodium hydrogen diphosphate anhydrate is used in food processing, and can improve a quality of food by avoiding poor taste, color, and quality of the food caused by inconsistency in pH. The anhydrate can also improve application efficiency and has wide application prospects.

### Example 1

In this example, a preparation method of a trisodium hydrogen diphosphate anhydrate included the following steps:
A trisodium hydrogen diphosphate monohydrate with a purity of 98.5% was heated in a SX₂-5-12 box-type resistance furnace at a constant temperature of 160°C for 125 min, where a weight loss on ignition was 4.25% (at 800°C±25°C).

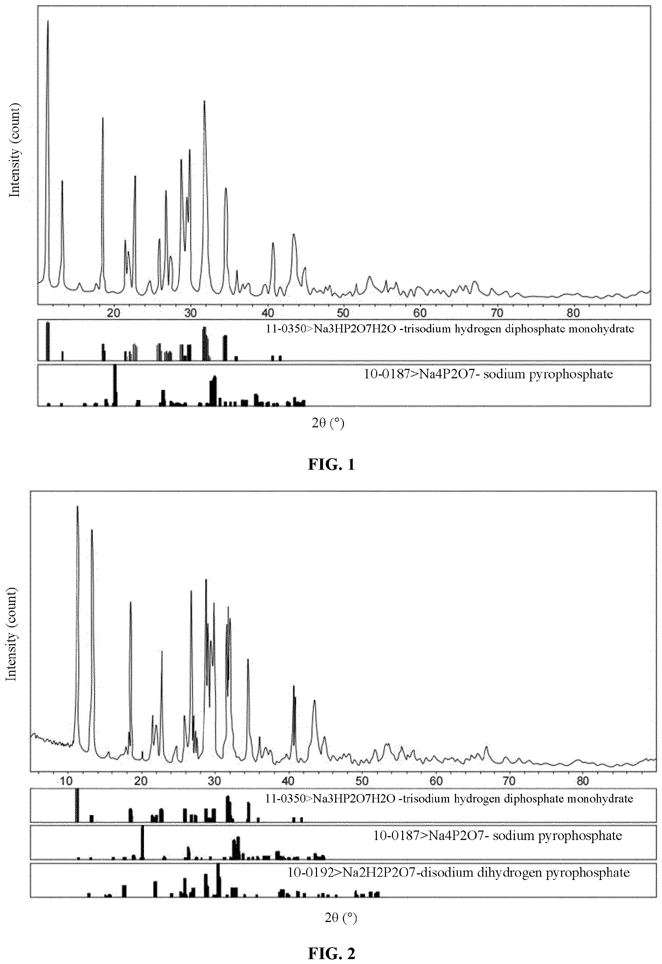

An obtained product was analyzed by XRD through a Malvern Panalytical pert 3 x-ray powder. A resulting XRD pattern was shown in FIG. 2.

### Comparative Example 1

In this comparative example, a preparation method of a product included the following steps:
A trisodium hydrogen diphosphate monohydrate with a purity of 98.5% was heated in a drying furnace at a constant temperature of 171 °C for 125 min, where a weight loss on ignition was 4.12% (at 800°C±25°C).

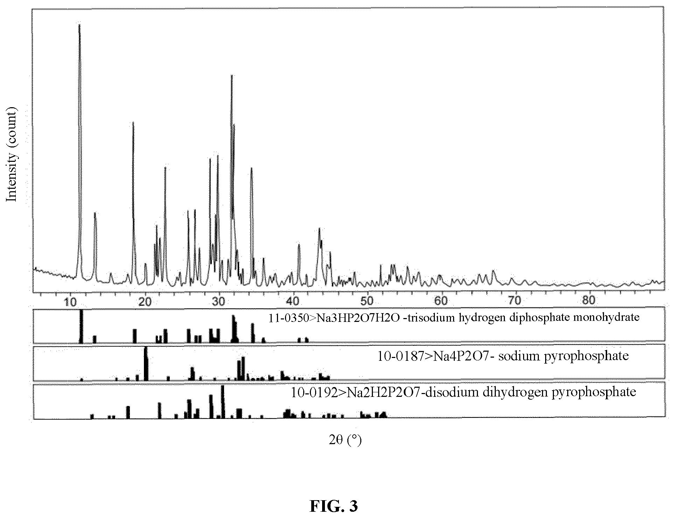

An obtained product was analyzed by XRD through a Malvern Panalytical pert 3 x-ray powder. A resulting XRD pattern was shown in FIG. 3.

### Comparative Example 2

In this comparative example, a preparation method of a product included the following steps:
A trisodium hydrogen diphosphate monohydrate with a purity of 98.5% was heated in a polymerization furnace at a constant temperature of 163°C for 117 min, where a weight loss on ignition was 4.53% (at 800°C±25°C).

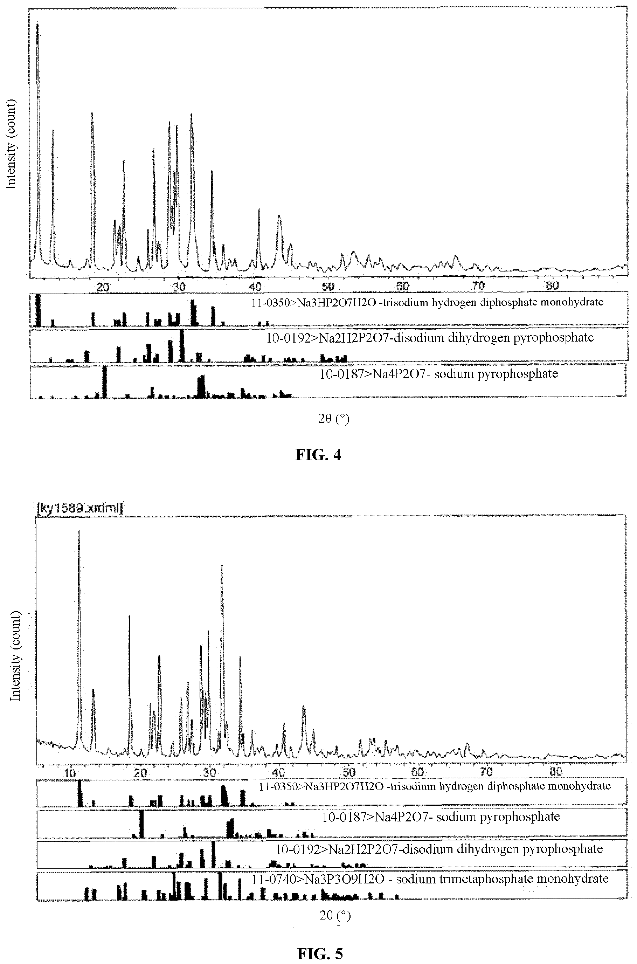

An obtained product was analyzed by XRD through a Malvern Panalytical pert 3 x-ray powder. A resulting XRD pattern was shown in FIG. 4.

### Comparative Example 3

In this comparative example, a preparation method of a product included the following steps:
A trisodium hydrogen diphosphate monohydrate with a purity of 98.5% was heated in a drying furnace at a constant temperature of 150°C for 145 min, where a weight loss on ignition was 4.49% (at 800°C±25°C).

An obtained product was analyzed by XRD through a Malvern Panalytical pert 3 x-ray powder. A resulting XRD pattern was shown in FIG. 5.

As shown in FIG. 1, an XRD pattern of the trisodium hydrogen diphosphate monohydrate was obtained. Qualitative + semi quantitative analysis results showed that: the trisodium hydrogen diphosphate monohydrate had a purity of 98.5%, and also included sodium pyrophosphate impurities with a mass fraction of 1.5%.

As shown in FIG 2, an XRD pattern of the trisodium hydrogen diphosphate anhydrate prepared in Example 1 was obtained. Qualitative + semi quantitative analysis results showed that: the trisodium hydrogen diphosphate anhydrate had a purity of 95.2%, and also included about 3.64% of sodium pyrophosphate impurities and about 1.16% of disodium dihydrogen pyrophosphate impurities by mass faction.

By comparing FIG. 1 with FIG. 2, it was seen that the peak positions of the trisodium hydrogen diphosphate anhydrate and the trisodium hydrogen diphosphate monohydrate had not changed. This showed that the preparation method provided by the present disclosure had successfully prepared the trisodium hydrogen diphosphate anhydrate with a purity of greater than or equal to 95.0%.

As shown in FIG 3, an XRD pattern of the control product prepared in Comparative Example 1 was obtained. Qualitative + semi quantitative analysis results showed that: the control product had the trisodium hydrogen diphosphate anhydrate of 83.8%, the sodium pyrophosphate of 7.4%, and the disodium dihydrogen pyrophosphate of 8.8% by mass faction.

This was because that although the raw material in FIG. 1 was used, and the weight loss on ignition was 4.12% (at 800°C±25°C), which was less than 4.5%, while the heating time was the same. However, the heating temperature was too high, the dehydration and hydrolysis of the trisodium hydrogen diphosphate monohydrate were intensified to cause the uneven distribution of sodium ions. In this way, the sodium pyrophosphate and disodium dihydrogen pyrophosphate were formed, such that the intensified hydrolysis led to a reduction in the content of trisodium hydrogen diphosphate anhydrate.

As shown in FIG 4, an XRD pattern of a product prepared at a weight loss on ignition, and heating temperature and time at a lower limit of this technology was obtained. Qualitative + semi quantitative analysis results showed that: the control product had the trisodium hydrogen diphosphate anhydrate of 95.07%, the sodium pyrophosphate of 2.4%, and the disodium dihydrogen pyrophosphate of 1.53% by mass faction. In addition, about 1% of other phosphate impurities were formed. This just reached the critical conditions for the formation of trisodium hydrogen diphosphate anhydrate.

This showed that too low temperature and too short time could not dehydrate the trisodium hydrogen diphosphate monohydrate to generate trisodium hydrogen diphosphate anhydrate. At the same time, under different heating conditions, the inhomogeneity of sodium ions caused by hydrolysis might also derive other different phosphate components.

FIG. 5 showed an XRD pattern of the product obtained in Comparative Example 3 provided by the present disclosure at a weight loss on ignition of 4.5% and a heating temperature below the lower limit of this technology for an extended heating time. By analyzing the chromatogram, it was seen that a mixture was obtained with a trisodium hydrogen diphosphate anhydrate content of 87.8%, a tetrasodium pyrophosphate content of 3.8%, a disodium dihydrogen pyrophosphate content of 2.1%, and a sodium phosphate content of 6.3%.

This showed that when the heating temperature was lower than the preferred value, but the heating time was longer than the preferred time, although the weight loss on ignition was less than 4.5%, the trisodium hydrogen diphosphate monohydrate might also be hydrolyzed during heating. In this way, the inhomogeneity of sodium ions was also formed, and the contents of sodium pyrophosphate, disodium dihydrogen pyrophosphate and other phosphate components increased, resulting in a decrease in the content of trisodium hydrogen diphosphate anhydrate.

Although the present disclosure has been illustrated and described with specific examples, it should be understood that the above examples are only used to illustrate the technical solution of the present disclosure, not to limit it. Those skilled in the art should understand that without departing from the spirit and scope of the present disclosure, the technical solutions described in the foregoing examples can be modified, or some or all of the technical features can be equivalently substituted. However, these modifications or substitutions do not make the essence of the corresponding technical solutions depart from the scope of the technical solutions of the examples of the present disclosure. It is therefore intended to cover within the appended claims all such substitutions and modifications that are within the scope of the present disclosure.

## Claims

1. A preparation method of a trisodium hydrogen diphosphate anhydrate, comprising the following steps:
heating a trisodium hydrogen diphosphate monohydrate at 155°C to 165°C for 110 min to 130 min.

2. The preparation method according to claim 1, wherein the trisodium hydrogen diphosphate monohydrate has a purity of greater than or equal to 98%; and
preferably, the trisodium hydrogen diphosphate monohydrate has a purity of greater than or equal to 98.5%.

3. The preparation method according to claim 1, wherein at 800°C±25°C, the trisodium hydrogen diphosphate monohydrate has a weight loss on ignition of less than 11%, preferably less than 9.0%.

4. The preparation method according to claim 1, wherein the heating is conducted at a constant temperature.

5. The preparation method according to claim 1, wherein the heating is conducted at 157°C to 163°C.

6. The preparation method according to claim 1, wherein the heating is conducted for 115 min to 128 min.

7. A trisodium hydrogen diphosphate anhydrate, prepared by the preparation method according to any one of claims 1 to 6, wherein at 800°C±25°C, the trisodium hydrogen diphosphate anhydrate has a purity of greater than or equal to 95.0% and a weight loss on ignition of less than or equal to 4.5%.

8. The trisodium hydrogen diphosphate anhydrate according to claim 7, wherein at 800°C±25°C, the weight loss on ignition is 4.2% to 4.5%.

9. The trisodium hydrogen diphosphate anhydrate according to claim 8, wherein the trisodium hydrogen diphosphate anhydrate has a purity of greater than or equal to 95.2%.

10. Use of the preparation method according to any one of claims 1 to 6 or the trisodium hydrogen diphosphate anhydrate according to any one of claims 7 to 9 in food processing.
